# EUROPEAN PATENT SPECIFICATION

(11) **EP 1 607 449 B1**
(45) Date of publication and mention of the grant of the patent: **06.01.2016**
(21) Application number: 05388050.6
(22) Date of filing: 17.06.2005
(51) Int. Cl.: C09D 5/00, C09D 5/16, D06M 16/00

(54) **IMPREGNATING AGENT FOR TREATING FISH FARMING NETS**
IMPRÄGNIERMITTEL ZUR BEHANDLUNG VON FISCHZUCHTNETZEN
AGENT IMPREGNANT POUR TRAITER DES FILETS POUR PISCICULTURE

(30) Priority: 17.06.2004 NO 20042548
(43) Date of publication of application: 21.12.2005
(73) Proprietor: Netkem AS, NO-1410 Kolbotn (NO)
(72) Inventor: Antonsen, Øistein, 1410 Kolbotn (NO); Antonsen, Rune, 1156 Oslo (NO); Tomasgaard, Lars, 1440 Drøbak (NO)
(74) Representative: Lillegraven, Rita

(56) References cited:
- US-B1- 6 207 290
- US-B1- 6 468 554
- DATABASE WPI Section Ch, Week 197632 Derwent Publications Ltd., London, GB; Class C01, AN 1976-60709X XP002346208 & JP 51 073121 A (OSAKA UNIV MICROB DISEAS) 24 June 1976 (1976-06-24)

## Description

The present invention relates to primers and impregnating agents, and to the use thereof for treating ropes, netting and/or nets for fish farming. The invention also relates to new types of fish farming nets and to a method for producing such nets.

The term "primer(s)" is used in this context to mean a base for other treatment. "Grounding" or "coating" are other terms that are synonymous with the term "primer".

The term "impregnating agent(s)" is used in this context to mean agents for protecting ropes, netting and fish farming nets against mechanical wear and to prevent fouling.

During a visit to Finland as early as in 1995, one of the inventors observed that there were holes in net bags used in fish farming. The problem then was wild cod which nibbled at the net bags and created holes in order to get in to eat. In the Mediterranean and the Atlantic Ocean, there lives a fish, the sea bream - a fish belonging to the perch family, which has many behavioural traits in common with the cod. There are different species of fish that behave in this way in different geographical areas. Otters, mink, seals etc, which gnaw, nibble or bite in order to gain access to the contents of the fish farming nets, are also a problem.

A problem encountered in the farming of cod, in particular, but also in the farming of other fish, is that the fish nibble holes in the nets and escape. This happens in particular in periods when there is little feed in that the fish nibble at, bite on to and rotate on the nets in order to get out. In general, the escape of fish from cod farming facilities may be said to be a greater problem than it is in a salmon farm.

The invention thus comprises all problems involving holes and damage to ropes, netting and nets caused by fish and other animals regardless of the type of fish or animal, and regardless of whether the hole or damage is caused from the inside or the outside.

It is known to treat nets with traditional primer, grounding, impregnation and/or copper-based impregnation to prevent cod from nibbling at the nets. However, this has been found to be insufficient to keep the cod away from the net wall.

Furthermore, tests have been carried out with netting of another type, such as polyethylene which is a coarser filament, in order to find a solution to this problem. Netting of this type makes it difficult for the cod to pull out strands and bite them off, but this rope type has low breaking strength and is thus less suitable. Tests have also been carried out using a very strong rope or filament - Dyneema (which is manufactured by DSM Dyneema, Heerlen, the Netherlands) - which is stronger than steel of the same dimension, but it is a very expensive material and will therefore probably only be used to a limited extent.

It is an object of the present invention to provide suitable primers and impregnating agents for ropes, netting and/or nets for fish farming which are of such nature that they prevent cod and other relevant species of fish and animals from nibbling at the nets.

This and other objects of the invention are attained by impregnating agents and/or primers which, in addition to standard ingredients such as oils, polymers, waxes, resins and binders, contain odorants to which cod and other relevant fish and animal species react when they come into contact with the smell and taste from the fish farming nets. This applies, for example, to nets consisting of netting made in accordance with NS 9415:2033, Chapter 8.3.3., which have been treated with said impregnating agents.

The present invention also relates to a method for treating nets, ropes and/or netting in that the nets, ropes or netting is impregnated with the said impregnating agents and/or primers, and to the use of the said impregnating agents and/or primers for treating nets, ropes and/or netting. The said impregnation is carried out by dip coating the net bag, netting or rope in vats, rotating drums or in another suitable manner. Afterwards, the net bag, netting or rope is dried in a drying tower, suspended from a crane, in drying drums or in another suitable manner.

In the present invention, odorants to which the cod react, such as seal oil and a bitter flavouring agent, are added to the primer and/or the net impregnating agent. The use of nets that have been treated with impregnating agents and/or primers according to the invention prevents the cod from biting holes in the nets.

The essential features of the invention are further defined in the attached patent claims.

The present invention also ensures, by means of the addition of porous particles such as stone dust and fine leca particles or volcanic ash etc. to the impregnating agent, that rapid washing-out/leaking-out of the bitter flavouring agent is prevented and that it is first released when, for example, the cod nibble at the net. Organic or synthetic fibres such as coconut fibre or the like can also be used to achieve a similar effect.

The addition of a flavouring agent, odorant, stone dust, leca particles, volcanic ash, fibre and/or other organic or synthetic material takes place:
- in a suitable binder such as a primer or impregnating agent, for treating fish farming nets;
- during the production of a suitable binder such as a primer or impregnation agent, base and/or finished product;
- after production, in the finished product.

Odorants or smelling substances that are used according to the invention include seal oil, seal oil extract and other organic or synthetic scents to which cod, other fish or relevant animal species react, and which cause the fish or animals to wholly or partly stay away from the net wall.

Bitter flavouring agents that can be used according to the invention include bitter additives, organic or synthetic, which cause discomfort to cod, other fish or relevant animal species. Examples of such additives are denatonium benzoate (C₂₈H₃₄N₂O₃, e.g., Bitrex®), amarogentin (chiratin), phenylthiocarbamide, herbs or bitter plants such as devil's claw (*Harpagophytum procumbens*), hops (*Humulus lupulus*), wormwood (*Artemesia absinthium*), bogbean (*Menyanthes trifoliata*) and yellow gentian (*Gentiana lutea*), and substances in the alkaloid group. Among these, yellow gentian has a bitter index of 10,000-30,000, and bogbean has a bitter index of 4,000-10,000.

Stone dust, leca particles, volcanic ash, fibre or other organic or synthetic material can be added separately or together with one or more of the others, and together with one or more of the aforementioned odorants and/or together with one or more of the aforementioned flavouring agents.

The porous articles are added in an amount of from 0.001-10%. Typical amounts are 0.01-3%.

The bitter substances are added in an amount of from 0.001-10%. Typical amounts are 0.01-3%. Bitrex®(which is produced by Macfarlan Smith Limited, Edinburgh, Scotland) is a preferred bitter flavouring agent.

The amount of natural and synthetic odorants that is added depends upon the properties of the products. Seal oil extract, which is a preferred odorant, is added in an amount of from 0.001-10%. A typical amount is 1-3%.

## Claims

1. An impregnating agent and/or primer for rope, netting and fish farming nets, which in addition to the standard components such as oils, polymers, waxes, resins and binders, is **characterised in that** it comprises one or more odorants which is seal oil, seal oil extract and other organic or synthetic odorants which cod, other fish or relevant animal species react to and keep away from.

2. An impregnating agent and/or primer according to claim 1,
**characterised in that** it further comprises one or more flavouring agents which is a bitter organic and/or synthetic additive which causes discomfort to cod, other fish or relevant animal species.

3. An impregnating agent and/or primer according to claim 2,
**characterised in that** the bitter additive is denatonium benzoate.

4. An impregnating agent and/or primer according to claim 1, which is **characterised in that** it further comprises porous particles such as stone dust, leca particles, volcanic ash or organic or synthetic fibres.

5. A fish farming net consisting of netting made in accordance with NS 9415:2003, Chapter 8.3.3., **characterised in that** it is treated with an impregnating agent and/or primer according to claims 1-4.

6. A method of treating ropes, netting or a fish farming net,
**characterised in that** the ropes, netting or net has an impregnating agent and/or primer according to claims 1-4 applied thereto by dip coating in vats, in rotating drums or in another suitable manner which per se is known, and is then dried in a per se known manner.

7. The use of an impregnating agent and/or primer according to claims 1-4, for treating ropes, netting and fish farming nets for protection against mechanical wear and to prevent fouling.

## Patentansprüche

1. Imprägniermittel und/oder Primer für Seilnetze, Netzgewebe und Fischzuchtnetze, welches neben den Standardkomponenten, wie beispielsweise Ölen, Polymeren, Wachsen, Harzen und Bindern, **dadurch gekennzeichnet, dass** es einen oder mehrere Geruchsstoff(e) umfasst, welche(r) Seehundöl, Seehundölextrakt und andere organische oder synthetische Geruchsstoffe ist bzw. sind, an welche Dorsch, andere Fisch- oder entsprechende Tiergattungen ansprechen, und von welchen sie fernhalten.

2. Imprägniermittel und/oder Primer nach Anspruch 1, **dadurch gekennzeichnet, dass** es ferner einen oder mehrere Aromastoff(e) umfasst, welche(r) ein bitteres organisches und/oder synthetisches Additiv ist bzw. sind, welches Dorschen, anderen Fischen oder entsprechenden Tiergattungen Unbehagen verursacht.

3. Imprägniermittel und/oder Primer nach Anspruch 2, **dadurch gekennzeichnet, dass** das bittere Additiv Denatoniumbenzoat ist.

4. Imprägniermittel und/oder Primer nach Anspruch 1, welches bzw. welcher **dadurch gekennzeichnet ist, dass** es bzw. er ferner poröse Partikel, wie beispielsweise Gesteinsstaub, Leca-Partikel, Vulkanasche oder organische oder synthetische Fasern, umfasst.

5. Fischzuchtnetz bestehend aus gemäß NS 9415:2003, Chapter 8.3.3., hergestelltem Netzgewebe, **dadurch gekennzeichnet, dass** es mit einem Imprägniermittel und/oder Primer nach Anspruch 1 bis 4 behandelt worden ist.

6. Verfahren für die Behandlung von Seilnetzen, Netzgewebe oder einem Fischzuchtnetz, **dadurch gekennzeichnet, dass** auf die Seilnetze, das Netzgewebe oder das Netz ein Imprägniermittel und/oder Primer nach Anspruch 1 bis 4 durch Tauchbeschichtung in Bottichen, Drehtrommeln oder in einer andere, an sich bekannte geeignete Art und Weise aufgetragen wird, und dass die Seilnetze, das Netzgewebe oder das Netz danach in einer an sich bekannten Weise getrocknet werden.

7. Verwendung eines Imprägniermittels und/oder Primers nach Anspruch 1 bis 4 für die Behandlung von Seilnetzen, Netzgewebe und Fischzuchtnetzen zum Schutz gegen mechanischen Verschleiß und zur Verhinderung von Bewuchs.

## Revendications

1. Agent d'imprégnation et/ou amorce pour une corde, des filets et des filets pour pisciculture qui, en plus des composants standards tels que des huiles, des polymères, des cires, des résines et des liants, est **caractérisé en ce qu**'il comprend une ou plusieurs substances odorantes étant l'huile de phoque, un extrait de l'huile de phoque et d'autres substances odorantes organiques ou synthétiques auxquelles la morue, d'autres poissons ou espèces animales concernées réagissent et desquelles ils s'abstiennent.

2. Agent d'imprégnation et/ou amorce selon la revendication 1,
**caractérisé en ce qu'**il comprend en outre un ou plusieurs agents d'aromatisation étant un additif organique et/ou synthétique amère qui provoque une gêne à la morue, à d'autres poissons ou espèces animales concernées.

3. Agent d'imprégnation et/ou amorce selon la revendication 2,
**caractérisé en ce que** l'additif amère est le benzoate de dénatonium.

4. Agent d'imprégnation et/ou amorce selon la revendication 1, qui est **caractérisé en ce qu'**il comprend en outre des particules poreuses telles que la poussière de pierre, des particules de Leca, la cendre volcanique ou des fibres organiques ou synthétiques.

5. Filet de pisciculture consistant en une nappe de filet réalisée conformément à NS 9415:2003, Chapitre 8.3.3., **caractérisé en ce qu**'il est traité avec un agent d'imprégnation et/ou une amorce selon les revendications 1 à 4.

6. Procédé de traitement de cordes, de filets ou d'un filet de pisciculture, **caractérisé en ce que** les cordes, les filets de pêche ou des filets sont revêtus d'un agent d'imprégnation et/ou d'une amorce selon les revendications 1 à 4 au moyen d'un revêtement par immersion dans des cuves, dans des tambours rotatifs ou d'une autre manière appropriée qui est connue en soi, et ensuite sont séchés dans une manière connue en soi.

7. Utilisation d'un agent d'imprégnation et/ou d'une amorce selon les revendications 1 à 4, pour le traitement de cordes, de filets et de filets de pisciculture pour la protection contre l'usure mécanique et en vue d'éviter la pollution.
